# EUROPEAN PATENT SPECIFICATION

(11) **EP 2 916 411 B1**
(45) Date of publication and mention of the grant of the patent: **20.12.2017**
(21) Application number: 12887626.5
(22) Date of filing: 01.11.2012
(51) Int. Cl.: H01H 9/52, H01H 33/00, H01H 33/12, H02G 5/10

(54) **POWER GENERATION MAIN CIRCUIT SWITCH**
HAUPTSCHALTER FÜR STROMERZEUGUNG
COMMUTATEUR DE CIRCUIT PRINCIPAL DE GÉNÉRATION D'ÉNERGIE

(43) Date of publication of application: 09.09.2015
(73) Proprietor: Mitsubishi Electric Corporation, Tokyo 100-8310 (JP)
(72) Inventor: YAMASHITA, Toru, Tokyo 100-8310 (JP); YOSHIDA, Daisuke, Tokyo 100-8310 (JP); OTANI, Hirokazu, Tokyo 100-8310 (JP)
(74) Representative: Zech, Stefan Markus
(86) International application number: PCT/JP2012/078357
(87) International publication number: WO 2014/068754

(56) References cited:
- EP-A1- 1 667 300
- EP-A1- 1 841 031
- EP-A1- 1 906 503
- JP-A- H04 359 617
- JP-A- 2001 008 337
- JP-A- 2006 166 697
- JP-A- 2008 011 605

## Description

### Field

The present invention relates to a power-generation main circuit switchgear installed, for example, between a power generator and a main transformer in a power plant.

### Background

Patent Literature 1 discloses a system in which a generator breaker (a power-generation main circuit switchgear) is provided at the midpoint of an isolated-phase bus to cool the isolated-phase bus and the generator breaker with wind forced by a cooling device. The forced wind is circulated in the conductor of the isolated-phase bus and between the conductor and the casing. Such forced wind is caused to flow by using the cooling device provided adjacent to the generator breaker, and the cooling device includes a blower and a cooler. That is, wind coming out of the blower is cooled by the cooler, flows from one end of an isolated-phase bus connected to one end of the generator breaker through between the conductor and the casing of the isolated-phase bus to the other end of the isolated-phase bus, enters the conductor at the other end of the isolated-phase bus, and then flows from the other end of the isolated-phase bus to the one end thereof to return to the generator breaker. The wind having reached the generator breaker passes through between the conductor and the casing of the generator breaker in the generator breaker, then flows from one end of an isolated-phase bus connected to the other end of the generator breaker through between the conductor and the casing of the isolated-phase bus to the other end of the isolated-phase bus, enters the conductor at the other end of the isolated-phase bus, and then flows from the other end of the isolated-phase bus to the one end thereof to return to the blower again. In this manner, the forced wind flows all over the isolated-phase buses and the generator breaker and the forced wind is cooled by the cooler.

Patent Literature 2 discloses a configuration in which only an isolated-phase bus between a power generator and a main transformer is forcibly cooled. That is, wind from a cooling device including an electric blower and a heat exchanger (a cooler) is caused to flow from one end of the isolated-phase bus to the other end thereof through a duct and then return to the electric blower so as to circulate. The forced wind flows between the conductor and the casing of the isolated-phase bus.

Meanwhile, there is a power-generation main circuit switchgear having a configuration not performing forced air cooling as mentioned above. For example, in Patent Literature 3, a high-output switchgear (a power-generation main circuit switchgear) is cooled through heat transfer by natural convection. That is, with this configuration, air inside the casing does not flow in the axial direction of the high-output switchgear, and thus a temperature difference increases between the upper part of the casing and the lower part of the casing in the cross section perpendicular to the axis, thereby generating natural convection. Heat generation from the internal conductor of the high-output switchgear moves to the casing due to radiation and natural convection and is released from the casing to ambient air. A further example for a high-voltage switchgear with cooling means is described in EP 1 667 300 A1.

### Citation List

### Patent Literatures

Patent Literature 1: Japanese Utility Model Publication No. H5-28896 (FIG. 1)
Patent Literature 2: Japanese Patent Publication No. H6-85614 (FIG. 1)
Patent Literature 3: Japanese Patent Application Laid-open No. 2005-32727 (FIG. 1)

### Summary

### Technical Problem

However, with the conventional configurations (Patent Literatures 1 and 2) in which the isolated-phase bus is cooled by forced air cooling, the wind is caused to flow all over the isolated-phase bus extending axially; therefore, there is a problem in that a large blower is required. Furthermore, because the cooler is provided, the cooling effect increases, thereby enabling a large electric current to flow even in a small power-generation main circuit switchgear; however, there is a problem in that the cooling device becomes large. In the power-generation main circuit switchgear, the upper temperature limit at the contact portion is defined by specifications. When it is desired to cause a large electric current to flow by a smaller power-generation main circuit switchgear, a cooling structure needs to be provided.

Meanwhile, with the configuration that does not use forced air cooling as in the conventional technique described in Patent Literature 3, the heat transfer coefficient is low because the flow rate of the air produced by natural convection is slow, and thus it is difficult to cause a large electric current to flow in a small power-generation main circuit switchgear.

The present invention has been achieved in view of the above problems, and an object of the present invention is to provide a power-generation main circuit switchgear that can cause a larger electric current to flow by effectively cooling an internal conductor with wind blowing from a small blower without using a cooler.

### Solution to Problem

In order to solve the above problems and achieve the object, a power-generation main circuit switchgear according to the present invention is a power-generation main circuit switchgear that is arranged at a midpoint of an isolated-phase bus connecting a power generator and a main transformer and that includes a breaking unit connected to the isolated-phase bus, the power-generation main circuit switchgear comprising: a casing with an axial direction thereof being an extending direction of the isolated-phase bus; an internal conductor that is arranged in the casing and constitutes the breaking unit; a duct that is provided on the casing separately for each phase and communicates with a space inside the casing through a plurality of vent holes; and a blower arranged in the duct to blow wind in the axial direction to allow the wind to circulate inside the duct and inside the casing through the vent holes, wherein the vent holes are formed through the duct and include a first vent hole disposed over the internal conductor of the breaking unit and on a downstream side of the blower in the axial direction, and a second vent hole provided on an upstream side of the blower in the axial direction, and wind blowing from the blower through an inside of the duct out of the first vent hole into the casing directly hits at least a part of the internal conductor in a vertical direction perpendicular to the internal conductor for cooling the internal conductor.

### Advantageous Effects of Invention

According to the present invention, a larger electric current can be caused to flow by effectively cooling an internal conductor with wind blowing from a small blower without using a cooler.

### Brief Description of Drawings

FIG. 1 is a longitudinal sectional view of relevant parts of a power-generation main circuit switchgear according to an embodiment.
FIG. 2 is a sectional view taken along line A-A in FIG. 1.

### Description of Embodiments

A power-generation main circuit switchgear according to embodiments of the present invention will be explained below in detail with reference to the drawings. The present invention is not limited to the embodiments.

### Embodiment.

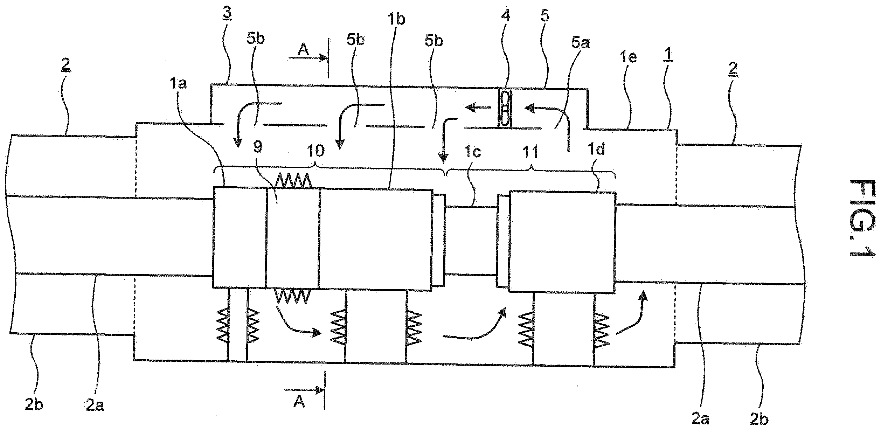

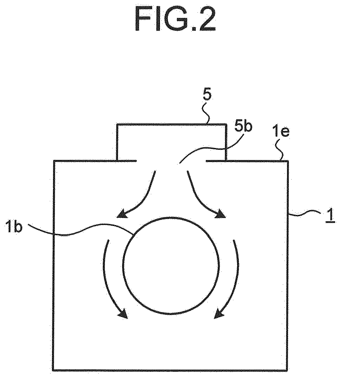

FIG. 1 is a longitudinal sectional view of relevant parts of a power-generation main circuit switchgear according to an embodiment. FIG. 2 is a sectional view taken along line A-A in FIG. 1. The configuration of the present embodiment is explained with reference to FIGS. 1 and 2. A power-generation main circuit switchgear 1 is installed at the midpoint of an isolated-phase bus 2 that connects a power generator (not shown) and a main transformer (not shown). The isolated-phase bus 2 includes a casing 2b and an internal conductor 2a arranged in the casing 2b and extending in the axial direction.

The power-generation main circuit switchgear 1 includes a casing 1e, a breaking unit 10 (breaker) arranged in the casing 1e and connected to the internal conductor 2a of the isolated-phase bus 2, a disconnecting unit 11 (disconnector) installed in the casing 1e and connected to the breaking unit 10 and the internal conductor 2a of the isolated-phase bus 2, and a blowing device 3 provided on the casing 1e.

The breaking unit 10 includes an internal conductor 1a (first internal conductor) connected to the internal conductor 2a of the isolated-phase bus 2, an internal conductor 1b (second internal conductor) connected to the disconnecting unit 11, and an insulating unit 9 interposed between the internal conductors 1a and 1b. The internal conductors 1a and 1b both have, for example, a cylindrical shape and are arranged away from each other in the axial direction. The internal conductor 1a is a fixed-side conductor and is connected to a fixed contact (not shown) arranged therein. The internal conductor 1b is a movable-side conductor and is connected to a movable contact (not shown) arranged therein. The movable contact (not shown) reciprocates in the tubular insulating unit 9 to come into and out of contact with the fixed contact (not shown). The internal conductor 1b is longer in the axial direction than the internal conductor 1a.

The disconnecting unit 11 includes an internal conductor 1c (third internal conductor) connected to the internal conductor 1b of the breaking unit 10 and an internal conductor 1d (fourth internal conductor) connected to the internal conductor 2a of the isolated-phase bus 2 and the internal conductor 1c. In the disconnecting unit 11, the internal conductor 1c reciprocates in the axial direction to come into and out of contact with the internal conductor 1b of the breaking unit 10.

The casing 1e of the power-generation main circuit switchgear 1 is connected to the casing 2b of the isolated-phase bus 2, and the spaces in the casings 1e and 2b are integrated and sealed from the outside. There is air in the casings 2b and 1e. The isolated-phase bus 2 is arranged, for example, horizontally. The casing 1e of the power-generation main circuit switchgear 1 is arranged, for example, with the axial direction thereof being horizontal. The casing 1e, for example, has a box shape being rectangular in cross section with the axial direction thereof being the extending direction of the isolated-phase bus 2 and is long in the axial direction.

The blowing device 3 is provided on the casing 1e, for example, in the upper part of the casing 1e. The blowing device 3 includes a duct 5 and a blower 4 in the duct 5. The duct 5 constitutes an air passage for the wind blowing from the blower 4. The duct 5, for example, has a box shape being rectangular in cross section and is long in the axial direction of the casing 1e. The duct 5 has a length in the axial direction of the casing 1e shorter than the casing 1e and is arranged to substantially cover the range of the internal conductors 1a to 1d.

Vent holes 5a and 5b are provided in the lower surface of the duct 5 and the upper surface of the casing 1e being in contact with the lower surface of the duct 5. That is, a plurality of openings provided in the lower surface of the duct 5 and the same number of openings provided in the upper surface of the casing 1e are aligned with each other, thereby forming the vent holes 5a and 5b. The vent hole 5a (second vent hole) is provided on the upstream side of the blower 4 and is used to draw wind from the inside of the casing 1e into the duct 5. The vent holes 5b (first vent holes) are provided on the downstream side of the blower 4 and are used to send wind from the inside of the duct 5 into the casing 1e. For example, one vent hole 5a is provided and three vent holes 5b are provided. By providing the vent holes 5a and 5b, the space in the duct 5 communicates with the space in the casing 1e through the vent holes 5a and 5b.

For example, the blower 4 is arranged over the disconnecting unit 11 to blow air in the axial direction of the casing 1e. For example, the vent hole 5a is arranged over the disconnecting unit 11. More specifically, the vent hole 5a is provided over the internal conductor 1d to correspond to the position of the internal conductor 1d in the axial direction. One of the three vent holes 5b is arranged over the internal conductor 1a to correspond to the position of the internal conductor 1a in the axial direction, and another of the vent holes 5b is arranged over the internal conductor 1b to correspond to the position of the internal conductor 1b in the axial direction. The remaining vent hole 5b is arranged over the end portion of the internal conductor 1b on the side of the disconnecting unit 11 in the axial direction to correspond to the end portion of the internal conductor 1b. The end portion is also the connection portion between the internal conductor 1c and the internal conductor 1b.

With such a configuration, the wind having flowed from the inside of the duct 5 into the casing 1e through the vent holes 5b can be caused to directly and substantially vertically hit the internal conductors 1a and 1b and the connection portion between the internal conductor 1c and the internal conductor 1b. The wind blowing from the blower 4 flows into the casing 1e from the inside of the duct 5 through the vent holes 5b, and further flows from the inside of the casing 1e into the duct 5 through the vent hole 5a, thereby circulating inside the casing 1e and the duct 5 while hardly circulating inside the casing 2b of the isolated-phase bus 2. That is, air circulation produced by the wind blowing from the blower 4 is substantially closed inside the casing 1e and the duct 5. In FIGS. 1 and 2, a flow of air in the casing 1e and the duct 5 is shown by arrows.

An operation according to the present embodiment is explained next. By operating the blower 4, air is taken into the duct 5 from the inside of the casing 1e through the vent hole 5a, and wind flows in the duct 5 as shown by the arrows and is distributed to the vent holes 5b to flow into the casing 1e. The wind having flowed into the casing 1e from the vent holes 5b directly hits the internal conductors 1a to 1c and goes around the internal conductors 1a to 1c to reach the bottom of the casing 1e. Meanwhile, because air is taken into the duct 5 from the inside of the casing 1e through the vent hole 5a, air around the vent hole 5a is drawn toward the vent hole 5a. Therefore, a large portion of air located on the bottom of the casing 1e and the like generally flows toward the vent hole 5a.

The air inside the casing 1e and the duct 5 is circulated as described above and the wind from the vent holes 5b is caused to directly hit the internal conductors 1a to 1c; therefore, the wind speed is high at portions hit by the wind. When the speed of wind hitting the internal conductors 1a to 1c is high, the heat transfer coefficient at these portions increase, and thus heat transfer from the portions to the air can be increased. This is understood, for example, from the fact that the heat transfer coefficient in a case where wind vertically hits a cylinder is approximately proportional to the square root of the wind speed.

With respect to the internal conductors 1a to 1d in the power-generation main circuit switchgear 1, an advantage of the method of causing wind to directly hit mainly the internal conductors 1a and 1b as mentioned above is as follows. The internal conductors 1a and 1b are not simple conductors but are composed of a contact or the like for opening/closing an electric current. Generally, a portion where heat generation at the time of energization is large is a contact portion of the breaking unit 10, and the internal conductors 1a to 1d do not have a uniform temperature in the axial direction but often have a temperature distribution such that the contact portion of the breaking unit 10 has the highest temperature. Therefore, by causing wind to directly hit the internal conductors 1a and 1b as mentioned above to blow the wind on the contact of the breaking unit 10 and the vicinity thereof, cooling of the contact is promoted, and the temperature distribution in the internal conductors 1a to 1d can be equalized.

The temperatures of the internal conductors 1a and 1b in the power-generation main circuit switchgear 1 are often higher than the temperature of the internal conductor 2a of the isolated-phase bus 2 due to the influence of the contact of the breaking unit 10, and by decreasing only the temperatures of the internal conductors 1a and 1b in the power-generation main circuit switchgear 1, an energization current can be further increased. The upper temperature limit of the contact of the breaking unit 10 is defined by specifications. Therefore, to increase the energization current, heat generation needs to be suppressed by increasing the size to decrease the resistance, or cooling by wind or the like needs to be performed.

In the present embodiment, the connection portion between the internal conductor 1c and the internal conductor 1b corresponds to a contact (not shown) portion of the disconnecting unit 11. While heat generation is smaller than the contact portion of the breaking unit 10, the connection portion is also a portion where heat generation at the time of energization is large. Therefore, the vent hole 5b is also provided over the connection portion so that wind directly hits the connection portion, thereby increasing the cooling effect.

As described above, it is configured such that wind is caused to directly hit mainly only the internal conductors 1a and 1b of the power-generation main circuit switchgear 1 and is circulated substantially inside the casing 1e and the duct 5. Therefore, the small blower 4 having a small output can efficiently cool the internal conductors without using a cooler, thereby enabling the blowing device 3 to be downsized and the energization current to be increased.

In the present embodiment, the vent holes 5b are provided at the three positions corresponding to the internal conductor 1a, the internal conductor 1b, and the connection portion between the internal conductor 1b and the internal conductor 1c, respectively. However, similar effects can be obtained also by configuring such that wind directly hits at least a part of the internal conductors 1a and 1b constituting the breaking unit 10 in the axial direction. For example, a configuration is also possible in which only the vent hole 5b corresponding to the position of the internal conductor 1a or the vent hole 5b corresponding to the position of the internal conductor 1b among the vent holes 5b is provided. However, the cooling effect of the configuration of the present embodiment is higher than that of these configurations. The number of each of the vent holes 5a and 5b to be installed is not limited to those in the example shown in FIG. 1. However, it is required to prevent the cooling effect from decreasing due to a decrease in the flow rate of the wind flowing into the casing 1e from the vent hole 5b.

### Industrial Applicability

As described above, the present invention is useful as a power-generation main circuit switchgear.

### Reference Signs List

1 power-generation main circuit switchgear, 2 isolated-phase bus, 1a to Id, 2a internal conductor, 1e, 2b casing, 3 blowing device, 4 blower, 5 duct, 5a, 5b vent hole, 9 insulating unit, 10 breaking unit, 11 disconnecting unit.

## Claims

1. A power-generation main circuit switchgear (1) that is configured to be arranged at a midpoint of an isolated-phase bus (2) connecting a power generator and a main transformer and that includes a breaking unit (10) connectable to the isolated-phase bus (2), the power-generation main circuit switchgear (1) comprising:
a casing (1e) with an axial direction thereof being an extending direction of the isolated-phase bus (2);
an internal conductor (1a, 1b) that is arranged in the casing (1e) and constitutes the breaking unit (10);
a duct (5) that is provided on the casing (1e) separately for each phase and communicates with a space inside the casing (1e) through a plurality of vent holes (5a, 5b); and
a blower (4) arranged in the duct (5) to blow wind in the axial direction to allow the wind to circulate inside the duct (5) and inside the casing (1e) through the vent holes (5a, 5b),
**characterized in that**
the vent holes (5a, 5b) are formed through the duct (5) and include a first vent hole (5b) disposed over the internal conductor (1a, 1b) of the breaking unit (10) and on a downstream side of the blower (4) in the axial direction, and a second vent hole (5a) provided on an upstream side of the blower (4) in the axial direction, and
wind blowing from the blower (4) through an inside of the duct (5) out of the first vent hole (5b) into the casing (1e) directly hits at least a part of the internal conductor (1a, 1b) in a vertical direction perpendicular to the internal conductor (1a, 1b) for cooling the internal conductor (1a, 1b).

2. The power-generation main circuit switchgear (1) according to claim 1, wherein
the internal conductor (1a, 1b) constituting the breaking unit (10) includes a first internal conductor (1a) being a fixed-side conductor, a second internal conductor (1b) being a movable-side conductor arranged away from the first internal conductor (1a) in the axial direction, and an insulating unit (9) interposed between the first internal conductor (1a) and the second internal conductor (1b) and having a movable contact arranged therein,
the first vent hole (5b) includes two vent holes, one of the two vent holes being disposed over the first internal conductor (1a) and another of the two vent holes being disposed over the second internal conductor (1b), and
wind blowing from the blower (4) through an inside of the duct (5) out of the one of the first vent holes into the casing (1e) directly hits the first internal conductor (1a), and wind blowing from the blower (4) through an inside of the duct (5) out of the another of the first vent holes into the casing (1e) directly hits the second internal conductor (1b).

3. The power-generation main circuit switchgear (1) according to claim 1, further comprising a disconnecting unit (11) connected to the breaking unit (10), wherein
the internal conductor (1a, 1b) constituting the breaking unit (10) includes a first internal conductor (1a) being a fixed-side conductor, a second internal conductor (1b) being a movable-side conductor arranged away from the first internal conductor (1a) in the axial direction, and an insulating unit (9) interposed between the first internal conductor (1a) and the second internal conductor (1b) and having a movable contact arranged therein,
a third internal conductor (1c) that constitutes the disconnecting unit (11) and is connected to the second internal conductor (1b) is provided in the casing (1e),
the first vent hole (5b) includes three vent holes, one of the three vent holes being disposed over the first internal conductor (1a), another of the three vent holes being disposed over the second internal conductor (1b), and a remaining one of the three vent holes being disposed over a connection portion between the second internal conductor (1b) and the third internal conductor (1c), and
wind blowing from the blower (4) through an inside of the duct (5) out of the one of the first vent holes into the casing (1e) directly hits the first internal conductor (1a), wind blowing from the blower (4) through an inside of the duct (5) out of the another of the first vent holes into the casing (1e) directly hits the second internal conductor (1b), and wind blowing from the blower (4) through an inside of the duct (5) out of the remaining one of the first vent holes into the casing (1e) directly hits the connection portion.

## Patentansprüche

1. Stromerzeugung-Hauptschalter (1), welcher dazu konfiguriert ist, an einem Mittelpunkt von einem Bus (2) mit isolierter Phase angeordnet zu werden, welcher einen Leistungsgenerator und einen Haupttransformator verbindet, und welcher eine Unterbrechungseinheit (10) enthält, welche mit dem Bus (2) einer isolierten Phase verbindbar ist, wobei der Stromerzeugung-Hauptschalter (1) enthält:
ein Gehäuse (1e), wobei sich eine Axialrichtung hiervon in Richtung des Buses (2) mit isolierter Phase erstreckt;
einen Innenleiter (1a, 1b), welcher in dem Gehäuse (1e) angeordnet ist und die Unterbrechungseinheit (10) bildet;
einen Durchgang (5), welcher separat für jede Phase auf dem Gehäuse (1e) bereitgestellt ist und über eine Mehrzahl von Belüftungslöchern (5a, 5b) mit einem Raum innerhalb des Gehäuses (1e) in Verbindung steht; und
einen Lüfter (4), welcher in dem Durchgang (5) angeordnet ist, um einen Luftstrom in der Axialrichtung zu blasen, um zu ermöglichen, dass der Luftstrom innerhalb des Durchgangs (5) und innerhalb des Gehäuses (1e) über die Belüftungslöcher (5a, 5b) zirkuliert,
**dadurch gekennzeichnet, dass**
die Belüftungslöcher (5a, 5b) über den Durchgang (5) ausgebildet sind und ein erstes Belüftungsloch (5b), welches oberhalb des Innenleiters (1a, 1b) von der Unterbrechungseinheit (10) und an einer Stromabwärtsseite des Lüfters (4) in der Axialrichtung angeordnet ist, und ein zweites Belüftungsloch (5a), welches an einer Stromaufwärtsseite des Lüfters (4) in der Axialrichtung bereitgestellt ist, enthalten, und wobei ein Luftstrom, welcher vom Lüfter (4) durch eine Innenseite des Durchgangs (5) aus dem ersten Belüftungsloch (5b) in das Gehäuse (1e) direkt hineingeblasen wird, auf zumindest einen Abschnitt des Innenleiters (1a,1b) in einer vertikalen Richtung senkrecht zum Innenleiter (1a, 1b) zum Kühlen des Innenleiters (1a, 1b) trifft.

2. Stromerzeugung-Hauptschalter (1) nach Anspruch 1, bei welchem
der Innenleiter (1a,1b), welcher die Unterbrechungseinheit (10) bildet, einen ersten Innenleiter (1a), welcher ein festseitiger Leiter ist, einen zweiten Innenleiter (1b), welcher ein bewegungsseitiger Leiter ist, welcher in der Axialrichtung vom ersten Innenleiter (1a) entfernt angeordnet ist, und eine Isoliereinheit (9) enthält, welche zwischen dem ersten Innenleiter (1a) und dem zweiten Innenleiter (1b) zwischengesetzt ist und einen darin angeordneten bewegbaren Kontakt enthält,
wobei das erste Belüftungsloch (5b) zwei Belüftungslöcher enthält, wobei eines der zwei Belüftungslöcher oberhalb des ersten Innenleiters (1a) angeordnet ist, und ein weiteres der zwei Belüftungslöcher oberhalb des zweiten Innenleiters (1b) angeordnet ist, und
wobei ein Luftstrom, welcher vom Lüfter (4) durch eine Innenseite des Durchgangs (5) aus dem einen der ersten Belüftungslöcher in das Gehäuse (1e) geblasen wird, direkt auf den ersten Innenleiter (1a) trifft, und ein Luftstrom, welcher vom Lüfter (4) durch eine Innenseite des Durchgangs (5) aus dem weiteren der ersten Belüftungslöcher in das Gehäuse (1e) geblasen wird, direkt auf den zweiten Innenleiter (1b) trifft.

3. Stromerzeugung-Hauptschalter (1) nach Anspruch 1, ferner umfassend eine Trennungseinheit (11), welche mit der Unterbrechungseinheit (10) verbunden ist, wobei
der Innenleiter (1a, 1b), welcher die Unterbrechungseinheit (10) bildet, einen ersten Innenleiter (1a), welcher ein festseitiger Leiter ist, einen zweiten Innenleiter (1b), welcher ein bewegungsseitiger Leiter ist, welcher in der Axialrichtung vom ersten Innenleiter (1a) entfernt angeordnet ist, und eine Isoliereinheit (9) enthält, welche zwischen dem ersten Innenleiter (1a) und dem zweiten Innenleiter (1b) zwischengesetzt ist und einen darin angeordneten bewegbaren Kontakt enthält,
ein dritter Innenleiter (1c), welcher die Trennungseinheit (11) bildet und mit dem zweiten Innenleiter (1b) verbunden ist, in dem Gehäuse (1e) bereitgestellt ist,
das erste Belüftungsloch (5b) drei Belüftungslöcher enthält, wobei eines der drei Belüftungslöcher oberhalb des ersten Innenleiters (1a) angeordnet ist, ein weiteres der drei Belüftungslöcher oberhalb des zweiten Innenleiters (1b) angeordnet ist, und ein verbleibendes der drei Belüftungslöcher oberhalb eines Verbindungsabschnitts zwischen dem zweiten Innenleiter (1b) und dem dritten Innenleiter (1c) angeordnet ist, und
wobei ein Luftstrom, welcher vom Lüfter (4) durch eine Innenseite des Durchgangs (5) aus dem einen der ersten Belüftungslöcher in das Gehäuse (1e) geblasen wird, direkt auf den ersten Innenleiter (1a) trifft, ein Luftstrom, welcher vom Lüfter (4) durch eine Innenseite des Durchgangs (5) aus dem weiteren der ersten Belüftungslöcher in das Gehäuse (1e) geblasen wird, direkt auf den zweiten Innenleiter (1b) trifft, und ein Luftstrom, welcher vom Lüfter (4) durch eine Innenseite des Durchgangs (5) aus dem verbleibenden der ersten Belüftungslöcher in das Gehäuse (1e) geblasen wird, direkt auf den Verbindungspunkt trifft.

## Revendications

1. Groupe de commutation pour circuit principal de génération de puissance (1) qui est configuré pour être agencé à un point médian d'un bus à phase isolée (2) qui connecte un générateur de puissance et un transformateur principal et qui inclut une unité de rupture (10) susceptible d'être connectée au bus à phase isolée (2), le groupe de commutation pour circuit principal de génération de puissance (1) comprenant :
un boîtier (1e) dans une direction axiale et une direction d'extension du bus à phase isolée (2) ;
un conducteur interne (1a, 1b) qui est agencé dans le boîtier (1e) et qui constitue l'unité de rupture (10) ;
un conduit (5) qui est prévu sur le boîtier (1e) séparément pour chaque phase et qui communique avec un espace à l'intérieur du boîtier (1e) via une pluralité de trous d'évent (5a, 5b) ; et
une soufflante (4) agencé dans le conduit (5) pour souffler un courant d'air dans la direction axiale et permettre au courant d'air de circuler à l'intérieur du conduit (5) et à l'intérieur du boîtier (1e) via les trous d'évent (5a, 5b),
**caractérisé en ce que**
les trous d'évent (5a, 5b) sont formés à travers le conduit (5) et incluent un premier trou d'évent (5b) disposé au-dessus du conducteur interne (1a, 1b) de l'unité de rupture (10) et sur un côté aval de la soufflante (4) dans la direction axiale, et un second trou d'évent (5a) prévu sur un côté amont de la soufflante (4) dans la direction axiale, et
le courant d'air soufflé par la soufflante (4) à travers l'intérieur du conduit (5) hors du premier trou d'évent (5b) jusque dans le boîtier (1e) vient tomber directement sur au moins une partie du conducteur interne (1a, 1b) dans une direction verticale perpendiculaire au conducteur interne (1a, 1b) pour refroidir le conducteur interne (1a, 1b).

2. Groupe de commutation pour circuit principal de génération de puissance (1) selon la revendication 1, dans lequel
le conducteur interne (1a, 1b) constituant l'unité de rupture (10) inclut un premier conducteur interne (1a) qui est un conducteur du côté fixe, un second conducteur interne (1b) qui est un conducteur du côté mobile agencé en éloignement du premier conducteur interne (1a) dans la direction axiale, et une unité d'isolation (9) interposée entre le premier conducteur interne (1a) et le second conducteur interne (1b) et ayant un contact mobile agencé à l'intérieur,
le premier trou d'évent (5b) inclut deux trous d'évent, l'un des deux trous d'évent étant disposé au-dessus du premier conducteur interne (1a) et un autre des deux trous d'évent étant disposé au-dessus du second conducteur interne (1b), et
le courant d'air soufflé depuis la soufflante (4) à travers l'intérieur du conduit (5) hors de l'un des premiers trous d'évent jusque dans le boîtier (1e) vient tomber directement sur le second conducteur interne (1b).

3. Groupe de commutation pour circuit principal de génération de puissance (1) selon la revendication 1, comprenant en outre une unité de déconnexion (11) connectée à l'unité de rupture (10),
dans lequel le conducteur interne (1a, 1b) constituant l'unité de rupture (10) inclut un premier conducteur interne (1a) qui est un conducteur du côté fixe, un second conducteur interne (1b) qui est un conducteur du côté mobile agencé en éloignement du premier conducteur interne (1a) dans la direction axiale, et une unité d'isolation (9) interposée entre le premier conducteur interne (1a) et le second conducteur interne (1b) et ayant un contact mobile agencé à l'intérieur,
un troisième conducteur interne (1c) qui constitue l'unité de déconnexion (11) et qui est connecté au second conducteur interne (1b) est prévu dans le boîtier (1e),
le premier trou d'évent (5b) inclut trois trous d'évent, l'un des trois trous d'évent étant disposé au-dessus du premier conducteur interne (1a), un autre des trois trous d'évent étant disposé au-dessus du second conducteur interne (1b), et un trou restant parmi les trois trous d'évent étant disposé au-dessus d'une portion de connexion entre le second conducteur interne (1b) et le troisième conducteur interne (1c), et
le courant d'air soufflé depuis la soufflante (4) à travers l'intérieur du conduit (5) hors du premier des premiers trous d'évent jusque dans le boîtier (1e) vient directement tomber sur le premier conducteur interne (1a), le courant d'air soufflé depuis la soufflante (4) à travers l'intérieur du conduit (5) hors de l'autre trou parmi les premiers trous d'évent jusque dans le boîtier (1e) vient directement tomber sur le second conducteur interne (1b), et le courant d'air soufflé depuis la soufflante (4) à travers l'intérieur du conduit (5) hors du trou restant parmi les premiers trous d'évent jusque dans le boîtier (1e) vient directement tomber sur la portion de connexion.
